# EUROPEAN PATENT SPECIFICATION

(11) **EP 1 737 110 B1**
(45) Date of publication and mention of the grant of the patent: **18.08.2010**
(21) Application number: 06011403.0
(22) Date of filing: 01.06.2006
(51) Int. Cl.: H02K 33/02

(54) **Oscillatory actuator**
Schwingender Aktuator
Actionneur oscillant

(30) Priority: 21.06.2005 JP 2005180375
(43) Date of publication of application: 27.12.2006
(73) Proprietor: Panasonic Electric Works Co., Ltd., Kadoma-shi Osaka (JP)
(72) Inventor: Taniguchi, Shinichi, Kadoma-shi Osaka 571- 8686 (JP); Shimizu, Hiroaki, Kadoma-shi, Osaka 571- 8686 (JP); Naruse, Haruhiko, Kadoma-shi, Osaka 571- 8686 (JP)
(74) Representative: Müller-Boré & Partner Patentanwälte

(56) References cited:
- EP-A- 0 343 350
- WO-A-2005/006538
- WO-A-2005/062445
- FR-A- 2 179 653
- JP-A- 62 065 779
- PATENT ABSTRACTS OF JAPAN vol. 2002, no. 11, 6 November 2002 (2002-11-06) -& JP 2002 199689 A (MATSUSHITA ELECTRIC WORKS LTD), 12 July 2002 (2002-07-12)
- PATENT ABSTRACTS OF JAPAN vol. 2003, no. 03, 5 May 2003 (2003-05-05) -& JP 2002 339863 A (SHOWA ELECTRIC WIRE & CABLE CO LTD), 27 November 2002 (2002-11-27)

## Description

The invention relates to a compact, lightweight, and less-costly oscillatory actuator of low oscillation type.

There is known an oscillatory actuator provided with a movable portion, and an electromagnetic driver for reciprocally driving the movable portion by an electromagnetic force. The oscillatory actuator is used in a driver of an electric razor, an electric toothbrush, or a like device.

Japanese Unexamined Patent Publication No. 2002-199689 (D1), for instance, discloses a linear oscillator. The linear oscillator is an example of an oscillatory actuator, and is provided with a reciprocally movable portion, a casing for housing the movable portion, and an amplitude control weight which is movably supported by the casing. In the linear oscillator, the movable portion and the amplitude control weight are reciprocally driven at a resonant frequency of the linear oscillator or a frequency close to the resonant frequency.

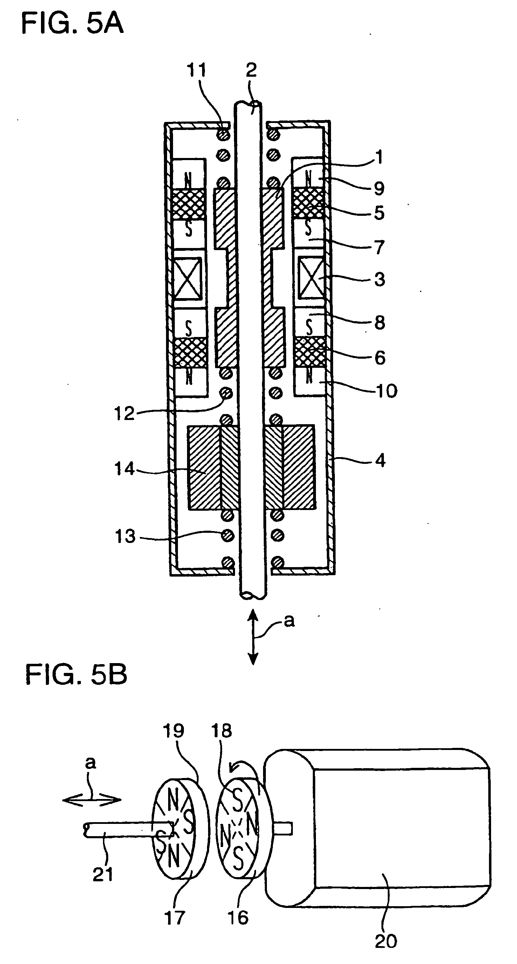

An exemplified structure of the linear oscillator is shown in FIG. 5A. Referring to FIG. 5A, the movable portion includes a plunger 1 and an output shaft 2. The plunger 1 is made of a magnetic material such as a steel material, and has a large diameter on axially opposite end portions thereof, and a small diameter on an axially central portion thereof. The output shaft 2 axially extends through the plunger 1 and the plunger 1 is fixed to the output shaft 2. An annular electromagnetic coil 3 is mounted around the plunger 1.

The movable portion is housed in a shield casing 4. The electromagnetic coil 3 is fixed to an inner wall of the shield casing 4. Annular permanent magnets 5 and 6 are respectively arranged at axially opposite sides of the electromagnetic coil 3 symmetrically to each other with respect to the electromagnetic coil 3. An annular inner yoke 7 is provided between the permanent magnet 5 and the electromagnetic coil 3, and an annular inner yoke 8 is provided between the permanent magnet 6 and the electromagnetic coil 3. An annular outer yoke 9 is provided at a position opposite to the yoke 7 with respect to the permanent magnet 5, and an annular outer yoke 10 is provided at a position opposite to the yoke 8 with respect to the permanent magnet 6. The electromagnetic coil 3, the permanent magnets 5 and 6, and the yokes 7, 8, 9, and 10 constitute an electromagnetic driver.

A first spring 11 is provided between an end surface of the plunger 1 and the shield casing 4. A second spring 12, an amplitude control weight 14, and a third spring 13 are provided in this order between the other end surface of the plunger 1 and the shield casing 4. The springs 11, 12, and 13 constitute a spring oscillator for axially urging the movable portion. The amplitude control weight 14 has such a mass as to generate a predetermined amplitude.

While an electric current does not flow through the electromagnetic coil 3, the oscillatory actuator is kept stationary at the position illustrated in FIG. 5A, specifically, at such a position that a magnetic force exerted to the plunger 1 by the permanent magnets 5 and 6 via the yokes 7, 8, 9, and 10, and the spring forces of the springs 11, 12, and 13 are balanced to each other. When an electric current is allowed to flow through the electromagnetic coil 3 in one direction from the above state, a magnetic flux generated at one of the permanent magnets 5 and 6 is weakened. As a result, the plunger 1 is moved toward the permanent magnet opposite to the permanent magnet with the weakened magnetic flux against a resilient force of the spring at the opposite side to the permanent magnet with the weakened magnetic flux. Similarly, when an electric current is allowed to flow through the electromagnetic coil 3 in the direction opposite to the above, the plunger 1 is moved in the direction opposite to the above against a resilient force of the spring at the opposite side to the permanent magnet with the weakened magnetic flux this time. In this way, the alternate current in the electromagnetic coil 3 reciprocates the output shaft 2 with the plunger 1 in the axial directions shown by the arrows "a" in FIG. 5A, in other words, oscillates the shaft 2 and the plunger 1.

D1 recites that the driver assembly shown in FIG. 5A can be regarded as a spring oscillator because of the provision of the springs 11, 12, and 13 by focusing on the axial movement of the movable portion including the plunger 1 and the output shaft 2, and the amplitude control weight 14. Also, D1 recites that it is possible to obtain two frequencies, i.e. resonant frequencies or natural frequencies f1, f2, as solutions of a motion equation representing free oscillation of the movable portion and the amplitude control weight 14 as mass points in the spring oscillator, based on the masses of the movable portion, the amplitude control weight 14, and a fixing portion of the oscillatory actuator, the spring constants of the springs 11, 12, and 13, an attenuation coefficient, and a like parameter. An oscillation mode at the natural frequency f1 of the first order i.e. a lower order is an oscillation mode where the movable portion and the amplitude control weight 14 are moved with phases identical to each other. An oscillation mode at the natural frequency f2 of the second order i.e. a higher order is an oscillation mode where the movable portion and the amplitude control weight 14 are moved with phases opposite to each other.

When a current with a frequency close to the second-order natural frequency f2 out of the natural frequencies f1 and f2 is supplied to the electromagnetic coil 3, the movable portion is axially reciprocated, and at the same time, the amplitude control weight 14 is moved with the phase opposite to the phase of the movable portion. Consequently, the amplitude control weight 14 cancels the inertia force of the movable portion, and likewise, the movable portion cancels the inertia force of the amplitude control weight 14. Also, in this state, the movable portion and the amplitude control weight 14 as {the }two mass points are moved in such a manner that the inertia forces of the movable portion and the amplitude control weight 14 are balanced to each other. Since the effect of canceling the inertia forces by the counteractions of the movable portion and the amplitude control weight 14 is great, a force to be transmitted from the two mass points i.e. the movable portion and the amplitude control weight 14 to the fixing portion is minimized. As a result, the oscillation of the linear oscillator is minimized. In other words, driving with less oscillation is realized.

Japanese Unexamined Patent Publication No. 62-65779 (D2) discloses an oscillatory actuator ("a vibrator device" in D2) as shown in FIG. 5B.

The oscillatory actuator has a rotary disk 16 fixed to an output shaft 21 of an electric motor 20, and an axially movable disk 17 which is fixed to an end portion of the output shaft 21 and is axially movable, wherein the rotary disk 16 and the axially movable disk 17 are axially opposed to each other. Permanent magnets 18 and 19 are attached to respective surfaces of the disks 16 and 17 opposed to each other. Plural poles (in FIG. 5B, four poles consisting of two north poles and two south poles) are alternately arranged circumferentially on each one of the permanent magnets 18 and 19.

With the thus constructed oscillatory actuator, the electric motor 20 rotationally drives the rotary disk 16 to generate magnetic attraction and repulsion forces alternately between the rotary disk 16 and the axially movable disk 17. The forces reciprocate the axially movable disk 17 and the output shaft 21 integrally in the axial directions of the arrows "a" in FIG. 5B, in other words, oscillate the disk 17 and the shaft 21.

The oscillator actuator recited in D1 involves the amplitude control weight 14 for suppressing the oscillation independently of the movable portion. Accordingly, the actuator requires a space for the amplitude control weight 14, which obstructs miniaturization of the oscillatory actuator. Also, adding the amplitude control weight 14 increases the weight and the cost, which makes it difficult to produce a lightweight and inexpensive actuator.

The oscillatory actuator recited in D2 does not include such an amplitude control weight as recited in D1, but has a problem in the oscillation of the actuator to be solved.

EP-A-0 343 350 discloses a motor winding assembly of mass Mm is disposed for reciprocating linear movement within a housing, while a motor armature assembly of mass Ma is disposed for reciprocating linear movement within the motor winding assembly. A first spring having a spring constant Km is connected between the motor winding assembly and the housing, and a second spring having a spring constant Ka is connected between the motor armature assembly and the housing. The spring constants Km and Ka satisfy the relation Km/Ka = Mm/Ma, and since the motor housing assembly and the motor armature assembly move by amounts inversely proportional to their respective masses, essentially no vibration is transmitted to the housing over a wide range of motor operating frequencies.

WO 2005/006538 relates to a small electrical appliance comprising an electric motor for generating at least one oscillating displacement. The electric motor comprises two drive components. One of the drive components is connected to at least one displaceable component by means of at least one first elastic element and can be induced to oscillate by means of the magnetic field of an electric solenoid. The small electrical appliance is **characterised in that** both drive components drive each other reciprocally and are mounted in a displaceable manner in the small electrical appliance in order to carry out mutually antiphase oscillating displacements.

In view of the above, an object of the present invention is to provide a compact, lightweight, and less-costly oscillatory actuator of low oscillation type.

To accomplish the above object, the invention provides an oscillatory actuator having the features of claim 1 utilizing an electromagnetic force. Preferred embodiments are defined in the dependent claims.

According to the present invention, an oscillatory actuator utilizing an electromagnetic force is provided, characterized by a movable portion; an electromagnetic driver which includes a magnet portion for reciprocating the movable portion in certain directions by an electromagnetic force, and an inner casing for housing the magnet portion therein and supporting the movable portion in such a manner that the movable portion is able to be reciprocated in the certain directions; and a body casing for housing the movable portion and the electromagnetic driver therein in such a manner as to allow for reciprocation of the movable portion and the electromagnetic driver in opposite directions to each other by driving of the electromagnetic driver, characterized in that the movable portion includes an output shaft extending in the certain directions, and an output-shaft-side permanent magnet which is fixed to a rear end of the output shaft; the electromagnetic driver includes an electric motor with a motor output shaft, the motor output shaft being disposed as opposed to the rear end of the output shaft of the movable portion and the inner casing is an actuator casing which is fixed to the electric motor at a rear end portion thereof; the magnet portion includes a motor-side permanent magnet which is fixed to the motor output shaft and opposes the output-shaft-side permanent magnet, opposite magnetic poles being so arranged circumferentially on each one of the permanent magnets as to generate an electromagnetic force for reciprocating the output shaft in the certain directions in response to rotational driving of the motor-side permanent magnet by the electric motor; and the electric motor and the actuator casing are so supported in the body casing in such a manner that the electric motor and the actuator casing can be integrally reciprocated in the directions identical to the certain directions.

With the oscillatory actuator, the electromagnetic driver that reciprocates with the phase opposite to the phase of the movable portion performs a function of an amplitude control weight, as well as the function of reciprocating the movable portion. The reciprocation of the electromagnetic driver can suppress the oscillation, and eliminate the need of additionally providing an amplitude control weight for suppressing the oscillation. Even if the amplitude control weight is added, the added weight is permitted to be small and lightweight. Thus, the arrangement enables to reduce the size, the weight, and the cost of the actuator as a whole.

These and other objects, features and advantages of the

present invention will become clear upon a reading of the following description of the preferred embodiments thereof, taken in connection with the accompanying drawings, in which:
FIG. 1 is a cross-sectional view of an oscillatory actuator which does not form part of the present invention, but rather shows background art;
FIG. 2A is a cross-sectional view of an oscillatory actuator according to a first embodiment of the invention;
FIG. 2B is a perspective view showing a movable portion and an electromagnetic driver of the oscillatory actuator in FIG. 2A;
FIGS. 3A through 3C are cross-sectional views showing states that the movable portion and the electromagnetic driver are reciprocated with phases opposite to each other;
FIG. 4A is a cross-sectional view taken along the line 4A-4A in FIG. 2A;
FIGS. 4B and 4C are cross-sectional views each showing a modification of the cross-sectional configuration shown in FIG. 4A;
FIG. 4D is a cross-sectional view taken along the line 4D-4D in FIG. 2A;
FIG. 4E is a cross-sectional view showing a modification of the cross-sectional configuration shown in FIG. 4D;FIG. 5A is a cross-sectional view showing a conventional oscillatory actuator of the type recited in D1; and
FIG. 5B is a perspective view showing a conventional oscillatory actuator of the type recited in D2.

In the following, preferred embodiments of the invention are described referring to the drawings. Arrangements and operations identical to or equivalent to those described in the prior art section are denoted with the like numerals, and a detailed description thereof will be omitted herein.

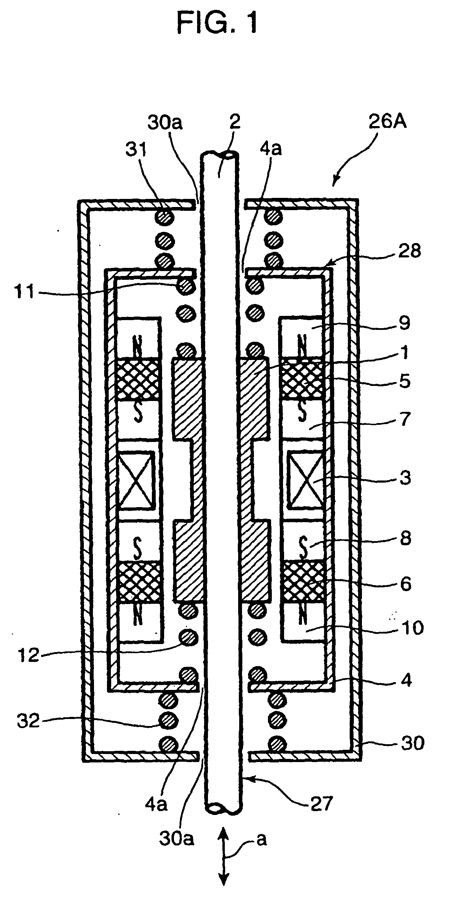

First, an oscillatory actuator 26A is shown in FIG. 1. The oscillatory actuator 26A is an exemplified actuator produced by applying the oscillatory actuator of the type disclosed in D1 to the invention.

The oscillatory actuator 26A includes a movable portion 27, an electromagnetic driver 28 for reciprocating the movable portion 27 in a certain direction i.e. axial directions corresponding to vertical directions in FIG. 1 by an electromagnetic force, and a body casing 30.

The movable portion 27 has a plunger 1, and an output shaft 2 fixed to the plunger 1. The output shaft 2 has a smaller diameter and a longer axial length than the plunger 1, and axially extends through a middle portion of the plunger 1. The plunger 1 is fixed to an intermediate portion of the output shaft 2, with a portion of the output shaft 2 extending through the plunger 1.

The electromagnetic driver 28 includes a shield casing 4, a magnet portion, and plunger support springs 11 and 12.

The shield casing 4 has an electromagnetic shielding function, and is of a tubular shape for housing an intermediate portion of the plunger 1 and the output shaft 2 therein. Through-holes 4a are formed in axially opposite ends of the shield casing 4, respectively. The output shaft 2 extends through the through-holes 4a in such a manner that the output shaft 2 can be axially reciprocated.

The magnet portion includes an annular electromagnetic coil 3, annular permanent magnets 5 and 6, annular inner yokes 7 and 8, and annular outer yokes 9 and 10. The electromagnetic coil 3 is fixed to an inner wall of the shield casing 4 at an axially intermediate position thereof. The permanent magnets 5 and 6 are fixed to the inner wall of the shield casing 4 in such a manner that the permanent magnets 5 and 6 are positioned at axially opposite ends of the electromagnetic coil 3, respectively. The inner yokes 7 and 8 are respectively fixed to the permanent magnets 5 and 6 at positions closer to the electromagnetic coil 3 than the permanent magnets 5 and 6. The outer yokes 7 and 8 are respectively fixed to the permanent magnets 5 and 6 at positions farther away from the electromagnetic coil 3 than the permanent magnets 5 and 6.

The plunger support springs 11 and 12 are each a helical compression spring, and are disposed between the plunger 1 and the shield casing 4. The plunger support spring 11 is compressively disposed between an outer wall of an axially one end of the plunger 1, and an inner wall of an axially one end of the shield casing 4. The plunger support spring 12 is compressively disposed between an outer wall of the axially other end of the plunger 1, and an inner wall of the axially other end of the shield casing 4. The springs 11 and 12 resiliently support the plunger 1 and the output shaft 2 within the shield casing 4 so as to allow for the axial reciprocation of the plunger 1 and the output shaft 2. In other words, the plunger 1 and the output shaft 2 are axially reciprocated in accordance with resilient deformations of the respective springs 11 and 12.

With the above arrangement, while a current does not flow through the electromagnetic coil 3, the plunger 1 is kept stationary at a position where a magnetic force exerted to the plunger 1 by the permanent magnets 5 and 6 via the yokes 7, 8, 9, and 10, and the spring forces of the springs 11 and 12 are balanced to each other, in other words, at the position illustrated in FIG. 1.

The body casing 30 has a cylindrical shape with a diameter larger than that of the shield casing 4 for housing the shield casing 4 therein. Through-holes 30a are formed in axially opposite ends of the body casing 30, respectively. The output shaft 2 extends through the through-holes 30a in such a manner that the output shaft 2 can be axially reciprocated.

Shield casing support springs 31 and 32 as electromagnetic driver support springs, each of which is a helical compression spring, are disposed between the body casing 30 and the shield casing 4.

The shield casing support spring 31 is compressively disposed between an outer wall of the axially one end of the shield casing 4, and an inner wall of an axially one end of the body casing 30. The shield casing support spring 32 is compressively disposed between an outer wall of the axially other end of the shield casing 4, and an inner wall of the axially other end of the body casing 30. The springs 31 and 32 resiliently support the shield casing 4 within the body casing 30 allowing for the reciprocation of the shield casing 4. In other words, the shield casing 4 is axially reciprocated in accordance with resilient deformations of the respective springs 31 and 32.

With the above arrangement, while a current does not flow through the electromagnetic coil 3, the shield casing 4 is kept stationary at a position where the spring forces of the springs 31 and 32 are balanced to each other.

The plunger support springs 11 and 12 constitute a spring oscillator for urging the movable portion 27 axially toward each other. Likewise, the shield casing support springs 31 and 32 constitute a spring oscillator for urging the shield casing 4 axially toward each other. The electromagnetic driver 28 with a significantly large mass functions as a weight substantially equivalent to the amplitude control weight 14 of the conventional oscillatory actuator of the type illustrated in FIG. 5A.

Specifically, a current flowing through the electromagnetic coil 3 from the state shown in FIG. 1 generates the electromagnetic force, which weakens a magnetic flux at one of the permanent magnets 5 and 6. This causes a movement of the plunger 1 toward the permanent magnet opposite to the permanent magnet by the spring force of one of the springs 11 and 12, which is provided at the opposite side to the permanent magnet with the weakened magnetic flux. Similarly, a current flowing through the electromagnetic coil 3 in the direction opposite to the above moves the plunger 1 in the direction opposite to the above against the spring force of the other one of the springs 11 and 12. In this way, the alternate current in the electromagnetic coil 3 reciprocates the plunger 1 and the output shaft 2 integrally and axially in a certain direction i.e. the directions shown by the arrows "a" in FIG. 1.

When the electromagnetic coil 3 is supplied with a current of a frequency close to the second-order i.e. the higher-order natural frequency f2, which is an oscillation mode of moving the movable portion 27 and the electromagnetic driver 28 with phases opposite to each other, similarly to the recitation in D1, the movable portion 27 is axially reciprocated, and at the same time, the electromagnetic driver 28 is moved with the phase opposite to the phase of the reciprocal movement of the movable portion 27, thereby canceling the inertia force of the movable portion 27. Likewise, the movement of the movable portion 27 cancels the inertia force of the electromagnetic driver 28. Also, in this state, the movable portion 27 and the electromagnetic driver 28 as two mass points are moved in such a way as to balance the inertia forces of the movable member 27 and the electromagnetic driver 28. Accordingly, the effect of canceling the inertia forces due to the counteractions of the movable portion 27 and the electromagnetic driver 28 is significantly great. This effect minimizes a force to be transmitted from the two mass points i.e. the movable portion 27 and the electromagnetic driver 28 to a fixing portion of the oscillatory actuator 26A, and resultantly minimizes the oscillation generated in the oscillatory actuator 26A. In other words, the oscillatory actuator 26A with less oscillation is realized.

In other words, in the oscillatory actuator 26A in accordance with the first embodiment, the electromagnetic driver 28 performs a function as a weight substantially equivalent to the amplitude control weight 14 shown in FIG. 5A in addition to the function of reciprocating the movable portion. This eliminates the need of providing the amplitude control weight 14 independently of the electromagnetic driver 28, which eliminates a space for the amplitude control weight 14, thereby enabling to miniaturize the actuator as a whole. Also, omission of the amplitude control weight 14 itself reduces the weight and the cost of the actuator as a whole.

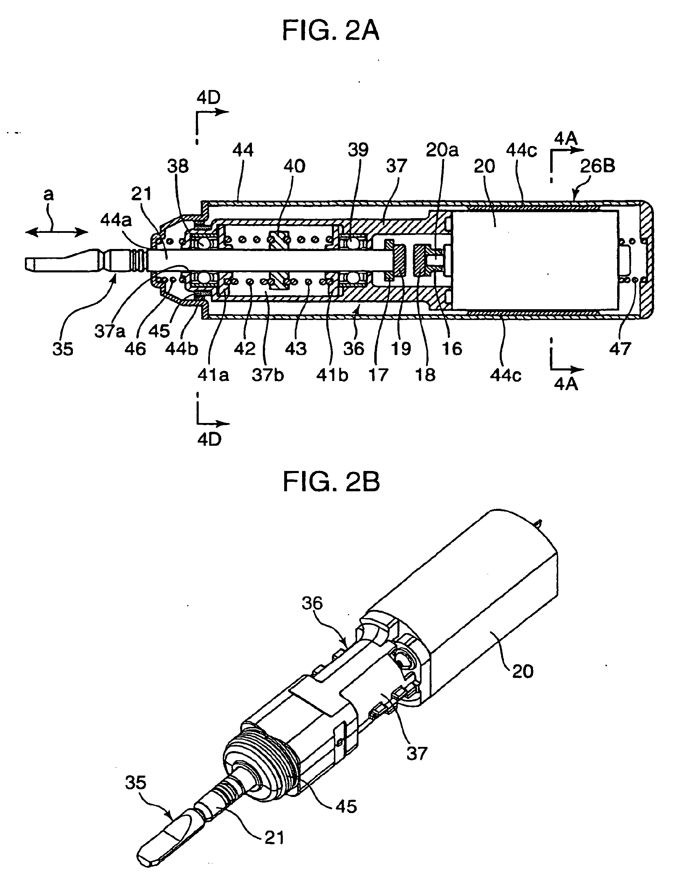

Next, an oscillatory actuator 26B according to a first embodiment of the invention is described referring to FIGS. 2A through 4E. The oscillatory actuator 26B is an exemplified actuator produced by applying the oscillatory actuator of the type disclosed in D2 to the invention.

The oscillatory actuator 26B includes a movable portion 35, an electromagnetic driver 36 for reciprocating the movable portion 35 in a certain direction i.e. axial directions corresponding to horizontal directions in FIG. 2A by an electromagnetic force, and a body casing 44.

The movable portion 35 has an output shaft 21 extending in the axial direction, an axially movable disk 17 as an output-shaft-side yoke, which is fixed to a rear end of the output shaft 21, and an output-shaft-side permanent magnet 19 fixed to the axially movable disk 17. The axially movable disk 17 has a doughnut plate-like shape, and is fixed to a periphery of the rear end of the output shaft 21. The permanent magnet 19 has a disk-like shape, and is fixed to a rear end surface of the axially movable disk 17. Opposite magnetic poles (i.e. north poles and south poles) are alternately arranged circumferentially on the permanent magnet 19.

The electromagnetic driver 36 includes an actuator casing 37 as an inner casing, an electric motor 20, a motor-side permanent magnet 18, a rotary disk 16 as a motor-side yoke, and output shaft support springs 42, 43, each of which is a helical compression spring.

The actuator casing 37 has a tubular shape, and front and rear bearings 38 and 39 in pair are disposed in the actuator casing 37. The bearing pair 38, 39 supports the output shaft 21 reciprocatably (specifically, in such a manner that the output shaft 21 can be axially reciprocated) in the axial direction. A lead end of the output shaft 21 extends through a through-hole 37a formed in the actuator casing 37 reciprocatably.

The bearings 38 and 39 are disposed on the front side and the rear side away from each other in the axial direction of the output shaft 21, respectively. A hollow portion 37b is defined between the bearings 37 and 38. A center plate 40 as a spring seat member is fixed to an intermediate portion of the output shaft 21, which is located within the hollow portion 37b. The output shaft support springs 42 and 43 are provided between a front side of the center plate 40 and the actuator casing 37, and between a rear side of the center plate 40 and the actuator casing 37, respectively.

The center plate 40 protrudes radially outwardly from an outer surface of the output shaft 21. Spring washers 41a and 41b are arranged opposed to each other on the front and rear sides with respect to the center plate 40 on the sides of the bearings 38 and 39, respectively. The output shaft support spring 42 is compressively disposed between the front-side spring washer 41a and a front surface of the center plate 40. The output shaft support spring 43 is compressively disposed between the rear-side spring washer 41b and a rear surface of the center plate 40.

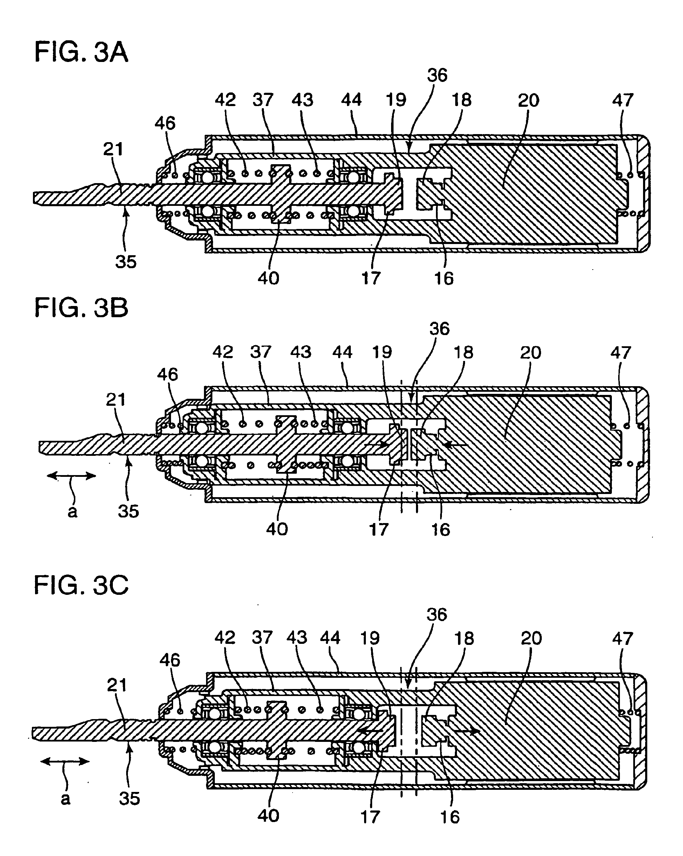

The output shaft support springs 42 and 43 resiliently support the center plate 40 and the output shaft 21 in such a manner as to allow for the axial reciprocation of the center plate 40 and the output shaft 21. In other words, the center plate 40 and the output shaft 21 are axially reciprocated in accordance with resilient deformations of the respective output shaft support springs 42 and 43. As a result of this operation, the output shaft 21 is kept stationary at a position where the springs 42 and 43 are balanced to each other, in other words, at the positions shown in FIGS. 2A and 3A.

The electric motor 20 is fixed to a rear end of the actuator casing 37, with an output shaft 20a thereof being directed forward. The electric motor 20 is axially reciprocated with the actuator casing 37. The motor output shaft 20a is fixed to the rotary disk 16, which is fixed to the motor-side permanent magnet 18.

The rotary disk 16 has a tubular shape, and is fixed to a periphery of the motor output shaft 20a. The motor-side permanent magnet 18 is fixed to a front surface of the rotary disk 16, and is opposed to the output-shaft-side permanent magnet 19. Similarly to the output-shaft-side permanent magnet 19, opposite magnetic poles (i.e. north poles and south poles) are alternately arranged circumferentially on the motor-side permanent magnet 18.

The body casing 44 has a substantially cylindrical shape, and houses the actuator casing 37 and the electric motor 20 therein. A through-hole 44a is formed in a front end of the body casing 44. The lead end of the output shaft 21 extends through the through-hole 44a reciprocatably.

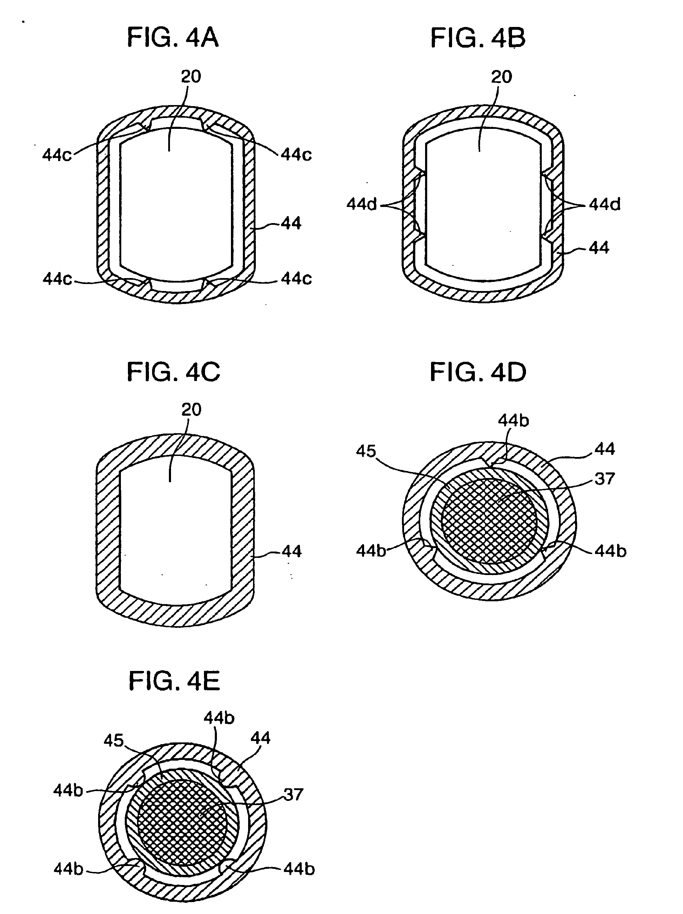

An annular metallic slider plate 45 is fixed to a periphery on a front end of the actuator casing 37. Plural ribs 44b are formed on an inner wall of the body casing 44 at a position corresponding to the slider plate 45. As shown in FIG. 4D, the ribs 44b each has a triangular shape in cross section, and are arranged equidistantly (in this example, at 120 degrees interval) around the circumference of the body casing 44. The ribs 44b inwardly support the slider plate 45, with their protruding end portions in contact with an outer surface of the slider plate 45. With this arrangement, the actuator casing 37 is supported in the body casing 44 reciprocatably in the axial direction. The slider plate 45 keeps the smooth sliding contact with the ribs 44b, and the contact can suppress wear of the ribs 44b more effectively than the direct contact between the casing 37 and the ribs 44b.

The shape and the number of the ribs 44b are arbitrarily settable. For instance, as shown in FIG. 4E, ribs 44b may each have a semicircular shape in cross section, be equidistantly arranged by 90 degrees interval around the circumference of a body casing 44, and protrude radially inwardly from an inner wall of the body casing 44 to support a slider plate 45 inwardly.

The electric motor 20 has an oblong shape in front view, as shown in FIGS. 4A through 4C. Plural ribs 44c protrude from the inner wall of the body casing 44 at an axial position corresponding to the electric motor 20. As shown in FIG. 4A, the ribs 44c each has a triangular shape in cross section, and support the motor 20 inwardly while keeping the motor 20 unrotatable, with their protruding end portions in contact with an outer surface of the motor 20. With this arrangement, the electric motor 20 is supported within the body casing 44 reciprocatably in the axial direction.

In this way, the actuator casing 37 and the electric motor 20 are supported in the body casing 44 in such a manner as to be axially reciprocated together.

The shape, the number, and the position of the ribs 44c for supporting the electric motor 20 are arbitrarily settable. For instance, in addition to the arrangement as shown in FIG. 4A, where the ribs 44c protrude inwardly from upper and lower inner walls of the body casing 44, as shown in FIG. 4B, triangular ribs 44d in cross section may protrude inwardly from left and right inner walls of a body casing 44, so that the ribs 44d support an electric motor 20 while keeping the electric motor 20 unrotatable. Further alternatively, a body casing 44 shown in FIG. 4C is also able to support the electric motor 20 while keeping the electric motor 20 unrotatable. The body casing 44 has such an internal configuration as to match an external configuration (in FIG. 4C, a substantially oblong shape) of an electric motor 20 so that the electric motor 20 is received in the body casing 44.

A pair of front and rear electromagnetic driver support springs 46 and 47, each of which is a helical compression spring, are disposed between an electromagnetic driver including the actuator casing 37 and the electric motor 20, and the body casing 44. The electromagnetic driver support spring 46 is compressively disposed between a front end surface of the actuator casing 37 and an inner wall of the front end of the body casing 44. The electromagnetic driver support spring 47 is compressively disposed between a rear end surface of the electric motor 20 and an inner wall of a rear end of the body casing 44.

The electromagnetic driver support springs 46 and 47 resiliently support the actuator casing 37 and the electric motor 20 in the body casing 44 in such a manner as to allow for the reciprocation of the actuator casing 37 and the electric motor 20 in the axial direction. In other words, the actuator casing 37 and the electric motor 20 are axially reciprocated together in accordance with resilient deformations of the respective electromagnetic driver support springs 46 and 47. In this way, the actuator casing 37 and the electric motor 20 are kept stationary at a position where the springs 46 and 47 are balanced to each other, i.e. the positions shown in FIGS. 2A and 3A.

In the embodiments of the invention, the spring 11, 12, 31, 32, 42, 43, 46, 47 may be a spring other than the helical compression spring. For instance, in the case where the electromagnetic driver support spring 46, 47 is a leaf spring or a torsion bar, the spring itself serves to keep the actuator casing 37 unrotatable, which eliminates the need of keeping the electric motor 20 unrotatable as mentioned above.

The output shaft support springs 42 and 43 constitute a spring oscillator for urging the movable portion 35 including the output shaft 21 axially toward each other. The electromagnetic driver support springs 46 and 47 constitute a spring oscillator for urging the electric motor 20 and the actuator casing 37 axially toward each other. In this arrangement, the electromagnetic driver 36 having a large mass functions as a weight substantially equivalent to the amplitude control weight 14 shown in FIG. 5A.

Specifically, when the electric motor 20 is powered from the state shown in FIG. 3A, the motor 20 rotationally drives the rotary disk 16 and the motor-side permanent magnet 18 which are fixed to the motor output shaft 20a to generate magnetic attraction and repulsion forces alternately between the motor-side permanent magnet 18, and the permanent magnet 19 fixed to the axially movable disk 17. These forces reciprocate the output shaft 21 and further the axially movable disk 17 in the axial directions shown by the arrows "a" in FIGS. 3B and 3C, in other words, oscillate the shaft 21 and the disk 17 integrally.

More specifically, as shown in FIG. 3B, when a magnetic attraction force is generated between the permanent magnets 18 and 19, the movable portion 35 is moved backward, and at the same time, the electromagnetic driver 36 is moved forward. On the other hand, as shown in FIG. 3C, when a magnetic repulsion force is generated between the permanent magnets 18 and 19, the movable portion 35 is moved forward, and at the same time, the electromagnetic driver 36 is moved backward. In other words, when the movable portion 35 is axially reciprocated, the electromagnetic driver 36 is moved with the phase opposite to the phase of the movable portion 35.

Accordingly, the electromagnetic driver 36 cancels the inertia force of the movable portion 35, and likewise, the movable portion 35 cancels the inertia force of the electromagnetic driver 36. Also, in this state, the movable portion 35 and the electromagnetic driver 36 as two mass points are moved in such a way as to balance the inertia forces of the movable portion 35 and the electromagnetic driver 36. Such counteractions provide a significantly great effect of canceling the inertia forces and of minimizing a force to be transmitted from the two mass points i.e. the movable portion 35 and the electromagnetic driver 36 to a fixing portion of the oscillatory actuator 26B, which resultantly minimizes the oscillation generated in the oscillatory actuator 26B. In other words, the oscillatory actuator 26B with less oscillation is realized.

In the oscillatory actuator 26B of the second embodiment, the electromagnetic driver 36 performs a function as a weight substantially equivalent to the amplitude control weight 14 shown in FIG. 5A in addition to the aforementioned function of reciprocating the movable portion, and eliminates the need of providing the amplitude control weight 14 independently of the electromagnetic driver 36. This eliminates a space for the amplitude control weight 14, which enables miniaturizing the actuator as a whole. Also, omission of the amplitude control weight 14 itself can reduce the weight and the cost of the actuator as a whole.

The invention, however, may include an arrangement with a weight substantially equivalent to the amplitude control weight. Even if the weight substantially equivalent to the amplitude control weight is provided, a smaller and more lightweight weight than the amplitude control weight used in the conventional oscillatory actuator can be used, which makes it possible to reduce the size, the weight, and the cost of the actuator as a whole.

The oscillatory actuator 26A, 26B is used for any purpose. For instance, the oscillator actuator 26A, 26B may not only be used as a driver of an electric razor, an electric toothbrush, or the like, but also be used as a driver of electrically-operated oral care devices. Use of the actuator 26A, 26B in the above electric devices reduces the weight of the device body, and yet suppresses the oscillation, which provides handy and convenient electric devices.

As mentioned above, the invention is directed to an oscillatory actuator provided with a movable portion, and an electromagnetic driver for reciprocating the movable portion in a certain direction by an electromagnetic force. The movable portion and the electromagnetic driver are reciprocated with phases opposite to each other in the body casing by driving of the electromagnetic driver. With the oscillatory actuator, an amplitude control weight for suppressing the oscillation can be eliminated, or can be made small and lightweight. Thereby, the size, the weight, and the cost of the actuator as a whole can be reduced.

Preferably, electromagnetic driver support springs which are resiliently and compressively deformable in the direction identical to the certain direction may be provided between the body casing and the electromagnetic driver, and the electromagnetic driver may be reciprocated in the direction identical to the certain direction in accordance with the resilient deformations of the respective electromagnetic driver support springs.

In the above arrangement, when the electromagnetic driver is not driven, the electromagnetic driver support springs retain the electromagnetic driver at a proper position. On the other hand, when the electromagnetic driver is driven, the resilient deformations of the respective electromagnetic driver support springs allow the reciprocation of the electromagnetic driver.

Preferably, movable portion support springs which are resiliently and compressively deformable in the direction identical to the certain direction may be provided between the movable portion and the electromagnetic driver, and the movable portion may be reciprocated in the certain direction in accordance with the resilient deformations of the respective movable portion support springs.

In the above arrangement, when the electromagnetic driver is not driven, the movable portion support springs retain the movable portion at a proper position. On the other hand, when the electromagnetic driver is driven, the resilient deformations of the respective movable portion support springs allow the reciprocation of the movable portion.

In the above arrangement, the electromagnetic driver includes a magnet portion for reciprocating the movable portion, and an inner casing for housing the magnet portion therein and supporting the movable portion in such a manner that the movable portion can be reciprocated in the certain direction, and the inner casing may be supported in the body casing in such a manner that the inner casing can be reciprocated in the direction identical to the certain direction.

In the above arrangement, the magnet portion housed in the inner casing is able to reciprocate the movable portion, and at the same time, the reciprocatable support of the inner casing in the body casing makes it possible to reciprocate the electromagnetic driver including the magnet portion and the inner casing.

Preferably, the inner casing may be a shield casing having an electromagnetic shielding function. Such a shield casing performs a dual function as a shielding member and a member for housing and supporting the magnet portion to realize a low oscillatory and low noise actuator of a compact construction.

As a first aspect of the invention, preferably, the movable portion may include an output shaft extending in the certain direction, and an output-shaft-side permanent magnet which is fixed to a rear end of the output shaft; the electromagnetic driver may include an electric motor with a motor output shaft, the motor output shaft being disposed as opposed to the rear end of the output shaft of the movable portion, and an actuator casing which is fixed to the electric motor at a rear end portion thereof, the actuator casing being the inner casing; the magnet portion may include a motor-side permanent magnet which is fixed to the motor output shaft, and opposes the output-shaft-side permanent magnet, opposite magnetic poles being so arranged circumferentially on each one of the permanent magnets as to generate an electromagnetic force for reciprocating the output shaft in the certain direction in response to rotational driving of the motor-side permanent magnet by the electric motor; and the electric motor and the actuator casing may be supported in the body casing in such a manner that the electric motor and the actuator casing are integrally reciprocated in the direction identical to the certain direction.

In the above arrangement, rotating the motor-side permanent magnet by the electric motor generates magnetic attraction and repulsion forces alternately between the motor-side permanent magnet and the output-shaft-side permanent magnet to thereby axially reciprocate the output shaft. Also, the reciprocation of the electromagnetic driver as a whole including the actuator and the electric motor allows the electromagnetic driver itself to function as an amplitude control weight for suppressing the oscillation.

Preferably, the movable portion may include an output-shaft-side yoke which is fixed to the rear end of the output shaft of the movable portion, the output-shaft-side permanent magnet being fixed to the output-shaft-side yoke, and the magnet portion may include a motor-side yoke which is fixed to the output shaft of the electric motor, the motor-side permanent magnet being fixed to the motor-side yoke.

Preferably, the main casing may include a plurality of ribs which protrude inwardly from an inner wall of the main casing, be arranged circumferentially away from each other, and extend in the direction identical to the certain direction, the ribs supporting the electromagnetic driver inwardly with protruding end portions thereof in contact with the electromagnetic driver.

In the above arrangement, the ribs stably support the electromagnetic driver on the side of the body casing. Also, the small contact area of the body casing with the electromagnetic driver (specifically, the contact area of the protruding end portions of the ribs with the electromagnetic driver) gives a small sliding resistance between the body casing and the electromagnetic driver.

It is preferable, concerning the movable portion support spring, that the movable portion includes a spring seat member which is provided at an axially intermediate portion of the output shaft, and which protrudes radially outwardly from the output shaft, and an output shaft support spring which is resiliently and compressively deformable in the direction identical to the certain direction is provided each between a front side of the spring seat member and the actuator casing, and between a rear side of the spring seat member and the actuator casing, the output shaft being reciprocated in the certain direction in accordance with the resilient deformations of the respective output shaft support springs.

This application is based on Japanese Patent Application No. 2005-180375 filed on June 21, 2005.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. An oscillatory actuator (26B) utilizing an electromagnetic force, comprising:
a movable portion (35);
an electromagnetic driver (36) which includes a magnet portion for reciprocating the movable portion (35) in certain directions by an electromagnetic force, and an inner casing (37) for housing the magnet portion therein and supporting the movable portion (35) in such a manner that the movable portion (35) is able to be reciprocated in the certain directions; and
a body casing (44) for housing the movable portion (35) and the electromagnetic driver (36) therein in such a manner as to allow for reciprocation of the movable portion (35) and the electromagnetic driver (36) in opposite directions to each other by driving of the electromagnetic driver (36),
wherein the actuator is arranged so that when the movable portion (35) is axially reciprocated, the electromagnetic driver (36) is moved with the phase opposite to the phase of the reciprocal movement of the movable portion (35), thereby cancelling the inertia force of the movable portion (35), and the movement of the movable portion (35) cancelling the inertia force of the electromagnetic driver (36),
**characterized in that**
the movable portion (35) includes an output shaft (21) extending in the certain directions, and an output-shaft-side permanent magnet (19) which is fixed to a rear end of the output shaft (21);
the electromagnetic driver (36) includes an electric motor (20) with a motor output shaft (20A), the motor output shaft (20A) being disposed as opposed to the rear end of the output shaft (21) of the movable portion (35) and the inner casing (37) is an actuator casing (37) which is fixed to the electric motor (20) at a rear end portion thereof;
the magnet portion includes a motor-side permanent magnet (18) which is fixed to the motor output shaft (20A) and opposes the output-shaft-side permanent magnet (19), opposite magnetic poles being so arranged circumferentially on each one of the permanent magnets (18, 19) as to generate an electromagnetic force for reciprocating the output shaft (21) in the certain directions in response to rotational driving of the motor-side permanent magnet (18) by the electric motor (20); and
the electric motor (20) and the actuator casing (37) are so supported in the body casing (44) in such a manner that the electric motor (20) and the actuator casing (37) can be integrally reciprocated in the directions identical to the certain directions.

2. The oscillatory actuator (26B) according to claim 1, **characterized in that**
electromagnetic driver support springs (46, 47) which are resiliently and compressively deformable in the direction identical to the certain directions are provided between the body casing (44) and the electromagnetic driver (36), and
the electromagnetic driver (36) is reciprocated in the direction identical to the certain directions in accordance with the resilient deformations of the respective electromagnetic driver support springs (46, 47).

3. The oscillatory actuator (26B) according to claim 1 or 2, **characterized in that**
movable portion support springs which are resiliently and compressively deformable in the directions identical to the certain directions are provided between the movable portion (35) and the electromagnetic driver (36), and
the movable portion (35) is reciprocated in the certain directions in accordance with the resilient deformations of the respective movable portion support springs.

4. The oscillatory actuator according to any one of claims 1 through 3, **characterized in that**
the inner casing (37) is a shield casing having an electromagnetic shielding function.

5. The oscillatory actuator (26B) according to any one of claims 1 through 4, **characterized in that**
the movable portion (35) includes an output-shaft-side yoke which is fixed to the rear end of the output shaft (21) of the movable portion (35), the output-shaft-side permanent magnet (19) being fixed to the output-shaft-side yoke, and
the magnet portion includes a motor-side yoke (16) which is fixed to the output shaft of the electric motor (20), the motor-side permanent magnet (18) being fixed to the motor-side yoke (16).

6. The oscillatory actuator (26B) according to any one of claims 1 through 5, **characterized in that**
the main casing includes a plurality of ribs which protrude inwardly from an inner wall of the main casing, are arranged circumferentially away from each other, and extend in the direction identical to the certain directions, the ribs supporting the electromagnetic driver (36) inwardly with protruding end portions thereof in contact with the electromagnetic driver (36).

7. The oscillatory actuator (26B) according to any one of claims 1 through 6, **characterized in that**
the movable portion (35) includes a spring seat member (40) which is provided at an axially intermediate portion of the output shaft (21), and which protrudes radially outwardly from the output shaft (21), and
the movable shaft support springs are output shaft support springs (42, 43) which are provided each between a front side of the spring seat member (40) and the actuator casing (37) and between a rear side of the spring seat member (40) and the actuator casing (37), the output shaft (21) being reciprocated in the certain direction in accordance with the resilient deformations of the respective output shaft support springs (42, 43).

## Patentansprüche

1. Unter Nutzung einer elektromagnetischen Kraft schwingender Aktuator (26B), der umfasst:
einen beweglichen Abschnitt (35);
einen elektromagnetischen Antrieb (36), der einen Magnetabschnitt, um den beweglichen Abschnitt (35) durch eine elektromagnetische Kraft in gewissen Richtungen hin und her zu bewegen, und ein Innengehäuse (37) zum Aufnehmen des Magnetabschnitts darin und Halten des beweglichen Abschnitts (35) in einer derartigen Weise, dass der bewegliche Abschnitt (35) fähig ist, in den gewissen Richtungen hin und her bewegt zu werden, umfasst; und
ein Körpergehäuse (44) zum Aufnehmen des beweglichen Abschnitts (35) und des elektromagnetischen Antriebs (36) darin in einer derartigen Weise, dass die Hin- und Herbewegung des beweglichen Abschnitts (35) und des elektromagnetischen Antriebs (36) in zueinander entgegengesetzten Richtungen durch den Antrieb des elektromagnetischen Antriebs (36) zugelassen wird,
wobei der Aktuator so angeordnet ist, dass, wenn der bewegliche Abschnitt (35) axial hin und her bewegt wird, der elektromagnetische Antrieb (36) mit zu der Phase der Hin- und Herbewegung des beweglichen Abschnitts (35) entgegengesetzter Phase bewegt wird, wodurch die Trägheitskraft des beweglichen Abschnitts (35) ausgeglichen wird und die Bewegung des beweglichen Abschnitts (35) die Trägheitskraft des elektromagnetischen Antriebs (36) ausgleicht,
**dadurch gekennzeichnet, dass**
der bewegliche Abschnitt (35) eine Ausgangswelle (21), die sich in den gewissen Richtungen erstreckt, und einen ausgangswellenseitigen Permanentmagneten (19) umfasst, der an einem hinteren Ende der Ausgangswelle (21) befestigt ist;
der elektromagnetische Antrieb (36) einen Elektromotor (20) mit einer Motorausgangswelle (20A) umfasst, wobei die Motorausgangswelle (20A) entgegengesetzt zu dem hinteren Ende der Ausgangswelle (21) des beweglichen Abschnitts (35) angeordnet ist und das Innengehäuse (37) ein Aktuatorgehäuse (37) ist, das an dem Elektromotor (20) an dessen hinterem Ende befestigt ist;
der Magnetabschnitt einen motorseitigen Permanentmagneten (18) umfasst, der an der Motorausgangswelle (20A) befestigt ist und dem ausgangswellenseitigen Permanentmagneten (19) entgegengesetzt ist, wobei entgegengesetzte Magnetpole auf jedem der Permanentmagnete (18, 19) dem Umfang nach so angeordnet sind, dass sie ansprechend auf den Drehantrieb des motorseitigen Permanentmagneten (18) durch den Elektromotor (20) eine elektromagnetische Kraft zum Hin- und Herbewegen der Ausgangswelle (21) in den gewissen Richtungen erzeugen; und
der Elektromotor (20) und das Aktuatorgehäuse (37) in einer derartigen Weise in dem Körpergehäuse (18) gehalten werden, dass der Elektromotor (20) und das Aktuatorgehäuse (37) in den zu den gewissen Richtungen identischen Richtungen integral hin und her bewegt werden können.

2. Schwingender Aktuator (26B) nach Anspruch 1, **dadurch gekennzeichnet, dass**
die Stützfedern (46, 47) des elektromagnetische Antriebs, die elastisch und unter Druck in die zu den gewissen Richtungen identischen Richtungen verformbar sind, zwischen dem Körpergehäuse (44) und dem elektromagnetischen Antrieb (36) bereitgestellt sind, und
der elektromagnetische Antrieb (36) entsprechend den elastischen Verformungen der jeweiligen Stützfedern (46, 47) des elektromagnetischen Antriebs in die zu den gewissen Richtungen identischen Richtungen hin und her bewegt wird.

3. Schwingender Aktuator (26B) nach Anspruch 1 oder 2, **dadurch gekennzeichnet, dass**
Stützfedern des beweglichen Abschnitts, die elastisch und unter Druck in die zu den gewissen Richtungen identischen Richtungen verformbar sind, zwischen dem beweglichen Abschnitt (35) und dem elektromagnetischen Antrieb (36) bereitgestellt sind, und
der elektromagnetische Antrieb (36) entsprechend den elastischen Verformungen der jeweiligen Stützfedern des beweglichen Abschnitts in die zu den gewissen Richtungen identischen Richtungen hin und her bewegt wird.

4. Schwingender Aktuator nach einem der Ansprüche 1 bis 3, **dadurch gekennzeichnet, dass**
das Innengehäuse (37) ein Abschirmgehäuse mit einer elektromagnetischen Abschirmfunktion ist.

5. Schwingender Aktuator (26B) nach einem der Ansprüche 1 bis 4, **dadurch gekennzeichnet, dass**
der bewegliche Abschnitt (35) ein ausgangswellenseitiges Joch umfasst, das an dem hinteren Ende der Ausgangswelle (21) des beweglichen Abschnitts (35) befestigt ist, wobei der ausgangswellenseitige Permanentmagnet (19) an dem ausgangswellenseitigen Joch befestigt ist, und
der Magnetabschnitt ein motorseitiges Joch (16) umfasst, das an der Ausgangswelle des Elektromotors (20) befestigt ist, wobei der motorseitige Permanentmagnet (18) an dem motorseitigen Joch (16) befestigt ist.

6. Schwingender Aktuator (26B) nach einem der Ansprüche 1 bis 5, **dadurch gekennzeichnet, dass**
das Hauptgehäuse eine Vielzahl von Rippen umfasst, die von einer Innenwand des Hauptgehäuses nach innen vorstehen, dem Umfang nach voneinander weg angeordnet sind und sich in die zu den gewissen Richtungen identischen Richtungen erstrecken, wobei die Rippen den elektromagnetischen Antrieb (36) einwärts halten, wobei ihre Endabschnitte in Kontakt mit dem elektromagnetischen Antrieb (36) sind.

7. Schwingender Aktuator (26B) nach einem der Ansprüche 1 bis 6, **dadurch gekennzeichnet, dass**
der bewegliche Abschnitt (35) ein Federsitzelement (40) umfasst, das an einem axialen Zwischenabschnitt der Ausgangswelle (21) bereitgestellt ist und das von der Ausgangswelle (21) radial nach außen vorsteht, und
die Stützfedern der beweglichen Welle Ausgangswellenstützfedern (42, 43) sind, die jeweils zwischen einer Vorderseite des Federsitzelements (40) und dem Aktuatorgehäuse (37) und zwischen einer Rückseite des Federsitzelements (40) und dem Aktuatorgehäuse (37) bereitgestellt sind, wobei die Ausgangswelle (21) entsprechend den elastischen Verformungen der jeweiligen Ausgangswellenstützfedern (42, 43) in den gewissen Richtungen hin und her bewegt wird.

## Revendications

1. Actionneur oscillant (26B) utilisant une force électromagnétique, comprenant :
une portion mobile (35) ;
un élément d'entraînement électromagnétique (36) qui comprend une portion d'aimant pour faire aller et venir la portion mobile (35) dans certaines directions par une force électromagnétique, et un boîtier intérieur (37) pour loger la portion d'aimant dans celui-ci et supporter la portion mobile (35) de telle manière que la portion mobile (35) est capable d'être faite aller et venir dans les certaines directions ; et
un boîtier de corps (44) pour loger la portion mobile (35) et l'élément d'entraînement électromagnétique (36) dans celui-ci de manière à permettre un va-et-vient de la portion mobile (35) et de l'élément d'entraînement électromagnétique (36) dans des directions opposées l'un par rapport à l'autre par entraînement de l'élément d'entraînement électromagnétique (36),
dans lequel l'actionneur est agencé de telle sorte que quand la portion mobile (35) est faite aller et venir axialement, l'élément d'entraînement électromagnétique (36) est déplacé avec la phase opposée à la phase du mouvement de va-et-vient de la portion mobile (35), annulant ainsi la force d'inertie de la portion mobile (35), et le mouvement de la portion mobile (35) annulant la force d'inertie de l'élément d'entraînement électromagnétique (36),
**caractérisé en ce que**
la portion mobile (35) comprend un arbre de sortie (21) s'étendant dans les certaines directions, et un aimant permanent côté arbre de sortie (19) qui est fixé à une extrémité arrière de l'arbre de sortie (21) ;
l'élément d'entraînement électromagnétique (36) comprend un moteur électrique (20) avec un arbre de sortie de moteur (20A), l'arbre de sortie de moteur (20A) étant disposé de manière opposée à l'extrémité arrière de l'arbre de sortie (21) de la portion mobile (35) et le boîtier intérieur (37) est un boîtier d'actionneur (37) qui est fixé au moteur électrique (20) à une portion d'extrémité arrière de celui-ci ;
la portion d'aimant comprend un aimant permanent côté moteur (18) qui est fixé à l'arbre de sortie de moteur (20A) et est opposé à l'aimant permanent côté arbre de sortie (19), des pôles magnétiques opposés étant agencés de manière circonférentielle de telle façon sur chacun des aimants permanents (18, 19) qu'ils génèrent une force électromagnétique pour faire aller et venir l'arbre de sortie (21) dans les certaines directions en réaction à un entraînement rotatif de l'aimant permanent côté moteur (18) par le moteur électrique (20) ; et
le moteur électrique (20) et le boîtier d'actionneur (37) sont supportés dans le boîtier de corps (44) de telle façon que le moteur électrique (20) et le boîtier d'actionneur (37) peuvent être faits aller et venir intégralement dans les directions identiques aux certaines directions.

2. Actionneur oscillant (26B) selon la revendication 1, **caractérisé en ce que**
des ressorts de support d'élément d'entraînement électromagnétique (46, 47) qui sont déformables de manière résiliente et compressible dans la direction identique aux certaines directions sont fournis entre le boîtier de corps (44) et l'élément d'entraînement électromagnétique (36), et
l'élément d'entraînement électromagnétique (36) est fait aller et venir dans la direction identique aux certaines directions conformément aux déformations résilientes des ressorts de support d'élément d'entraînement électromagnétique (46, 47) respectifs.

3. Actionneur oscillant (26B) selon la revendication 1 ou 2, **caractérisé en ce que**
des ressorts de support de portion mobile qui sont déformables de manière résiliente et compressible dans les directions identiques aux certaines directions sont fournis entre la portion mobile (35) et l'élément d'entraînement électromagnétique (36), et
la portion mobile (35) est faite aller et venir dans les certaines directions conformément aux déformations résilientes des ressorts de support de portion mobile respectifs.

4. Actionneur oscillant selon l'une quelconque des revendications 1 à 3, **caractérisé en ce que**
le boîtier intérieur (37) est un boîtier protecteur présentant une fonction de protection électromagnétique.

5. Actionneur oscillant (26B) selon l'une quelconque des revendications 1 à 4, **caractérisé en ce que**
la portion mobile (35) comprend une culasse côté arbre de sortie qui est fixée à l'extrémité arrière de l'arbre de sortie (21) de la portion mobile (35), l'aimant permanent côté arbre de sortie (19) étant fixé à la culasse côté arbre de sortie, et
la portion d'aimant comprend une culasse côté moteur (16) qui est fixée à l'arbre de sortie du moteur électrique (20), l'aimant permanent côté moteur (18) étant fixé à la culasse côté moteur (16).

6. Actionneur oscillant (26B) selon l'une quelconque des revendications 1 à 5, **caractérisé en ce que**
le boîtier principal comprend une pluralité de nervures qui dépassent vers l'intérieur depuis une paroi intérieure du boîtier principal, sont agencées de manière circonférentielle éloignées les unes des autres, et s'étendent dans la direction identique aux certaines directions, les nervures supportant l'élément d'entraînement électromagnétique (36) vers l'intérieur avec des portions d'extrémités dépassant de celui-ci en contact avec l'élément d'entraînement électromagnétique (36).

7. Actionneur oscillant (26B) selon l'une quelconque des revendications 1 à 6, **caractérisé en ce que**
la portion mobile (35) comprend un organe de siège de ressort (40) qui est fourni à une portion axialement intermédiaire de l'arbre de sortie (21), et qui dépasse radialement vers l'extérieur depuis l'arbre de sortie (21), et
les ressorts de support d'arbre mobile sont des ressorts de support d'arbre de sortie (42, 43) qui sont fournis chacun entre un côté frontal de l'organe de siège de ressort (40) et le boîtier d'actionneur (37), et entre un côté arrière de l'organe de siège de ressort (40) et le boîtier d'actionneur (37), l'arbre de sortie (21) étant fait aller et venir dans la certaine direction conformément aux déformations résilientes des ressorts de support d'arbre de sortie (42, 43) respectifs.
